Europäisches Patentamt

European Patent Office

Office européen des brevets

(11) Publication number : **0 475 875 A1**

# (12) EUROPEAN PATENT APPLICATION

(21) Application number : **91500095.4**

(22) Date of filing : **12.08.91**

(51) Int. Cl.⁵ : **B62M 1/06**

(30) Priority : **13.08.90 ES 9002528 U**
**05.07.91 ES 9101581**

(43) Date of publication of application :
**18.03.92 Bulletin 92/12**

(84) Designated Contracting States :
**AT BE DE FR GB IT NL**

(71) Applicant : **Perez Blanco, Juan Manuel**
**Betis, 41-47**
**E-41010 Sevilla (ES)**
(71) Applicant : **INRUSTICA, S.A.**
**Padilla, 6**
**E-28006 Madrid (ES)**

(72) Inventor : **Perez Blanco, Juan Manuel**
**Betis, 41-47**
**E-41010 Sevilla (ES)**

(74) Representative : **Ungria Lopez, Javier et al**
**Avda. Ramon y Cajal, 78**
**E-28043 Madrid (ES)**

(54) **Means for moving scooters and skates forward due to the effect of the user's weight.**

(57) It is composed of a platform carrying guiding and drive wheels (2, 12) and (3, 13) respectively, over which are some parallel, articulated arms at distanced positions (7, 15), a upper mobile plate (6, 14) parallel to the platform (1, 11) and prone to lower due to the effect of the user's weight on it. One of these arms (7, 15) is extended at its lower end to form a lever ending in a toothed sector (5), to form a jack arm (8) that engages with a free wheel (4, 18) of the unidirectional type. On lowering the upper plate (6, 14) and dropping the mentioned lever or jack arm (8) due to the user's weight, the teeth of the toothed sector (5) engage with the unidirectional pinion (4).

In a second embodiment, this forward movment is also obtained by means of an extension (16) at the end of one of the arms (15). At the free end of the extension (16) is a drag chain (17) engaging with the free wheel (18). This drag chain (17) has its other end fastened to a fixed point (20) of the platform (11) with the insertion of a recoil spring (19).

FIG. 4

EP 0 475 875 A1

## OBJECT OF THE INVENTION

The present invention, according to that expressed in the title of this descriptive report, consists of a device, for moving forward due to the inertia of the user's weight on scooters and skates offering a series of relevant and beneficial characteristics in this sector of current skating techniques.

The object of the invention is to benefit from the weight of the user mounted on the scooter to generate a forward movement.

As is known, scooters and skates to which the novel characteristics of the invention are applicable count with a platform with front and back wheels and with the user mounted on the platform with both feet or with a skate tied to each foot.

## BACKGROUND OF THE INVENTION

Currently devices are known consisting of a trolley supported on wheels or rollers, on which the user is mounted, having a basically vertical means of driving and connected to the live axle by means of a free wheel device. The vertical element which is held by the user, supports a nut working with an Archimedean screw axle, driving at least one wheel of the trolley and there being a second screw thread of the opposite direction in the axle providing a free wheel device and permitting that the vertical element can rise while the screw axle continues rotating in the same direction.

## DESCRIPTION OF THE INVENTION

To obtain the fundamental characteristics contributed by the invention, defined as has already been indicated, incorporating a mechanism of advancing and drives by the inertia of the user's weight, one of the wheel axles, preferably the front one, incorporating a unidirectional pinion of the type used in bicycles, preferably driven by a jack arm device linked with the arm or support which acts as a lever arm, pivoting on a lower axle fixed to the platform, being the said jack arm connected to a mobile plate, in such a way that on lowering the latter the pinion rotates.

The plate is displaced to carry out the operational stroke of the jack arm, due to the weight of the user gravitating over it. To enable the user to maintain his vertical position during the operation of the unidirectional pinion making the scooter move forward, the said mobile plate displaces in a parallel manner at the same time in relation with the platform through some strong parallel arms, in the form of an articulate parallelogram.

Some springs or tensors have been incorporated rapidly obtaining the recovery of the initial position of elevation of the user support plate, in relation to the platform.

The trajectory followed by any point of the support plate, is defined by an arc identical to that described by the connection extreme of any one of the plate arms, on pivoting with respect to its lower fixed point with the platform. The toothed sector of the jack arm is permanently engaged with the unidirectional pinion during the deformation of the parallelogram when the mobile plate approaches the platform, as a result of the inertia of the user's weight.

With this device, when the user applies his weight to the support plate, the toothed sector of the jack arm produces the rotation of the unidirectional pinion, which will determine the forward movement of the scooter or skate. The repetition of this operation several times, dependent of the impulse or pressure applied, will increase the speed of advancing.

In another operation mode of the invention, based on the same working principle, the platform supporting a pair of directional wheels and at least one motory, is fixed to the end of a chain causing the rotation of the unidirectional pinion which is pressed on the live axle, obtaining the drag of the chain by means of a swinging lever in whose angular travel the operation of the standard system of transmission is generated and through a clutch mechanism acting directly on the wheel or motory wheels, or over the axle to move the apparatus.

The transmission mechanism can have an intermediate stage of reduction or multiplication of movement.

The swinging lever is operated by the mobile plate or support plate on which the user is mounted. In this case, the means of recovering the original position or distance between the platform and the mobile plate are preferable determined by a helicoidal spring, connected in line with the chain.

To make the understanding of the characteristics of the invention easy and forming an integral part of this descriptive report, some plans are attached in whose figures, the following has been represented with an illustrative and non-limiting character:

## BRIEF DESCRIPTION OF THE DRAWINGS

Figure 1.- A schematic view in a section of a longitudinal elevation, of a scooter including a jack arm device and pinion to make the scooter move forward due to the inertia of the user's weight, according to the invention.

Figure 2.- A schematic plan view of that shown in figure 1.

Figure 3.- A schematic view of longitudinal elevation of a scooter including a chain device to obtain the mentioned forward movement of the scooter, according to the other operation mode of the invention.

Figure 4.- A partial view at a greater scale, of that shown in the previous figure.

## DESCRIPTION OF THE PREFERRED OPERATING MODE

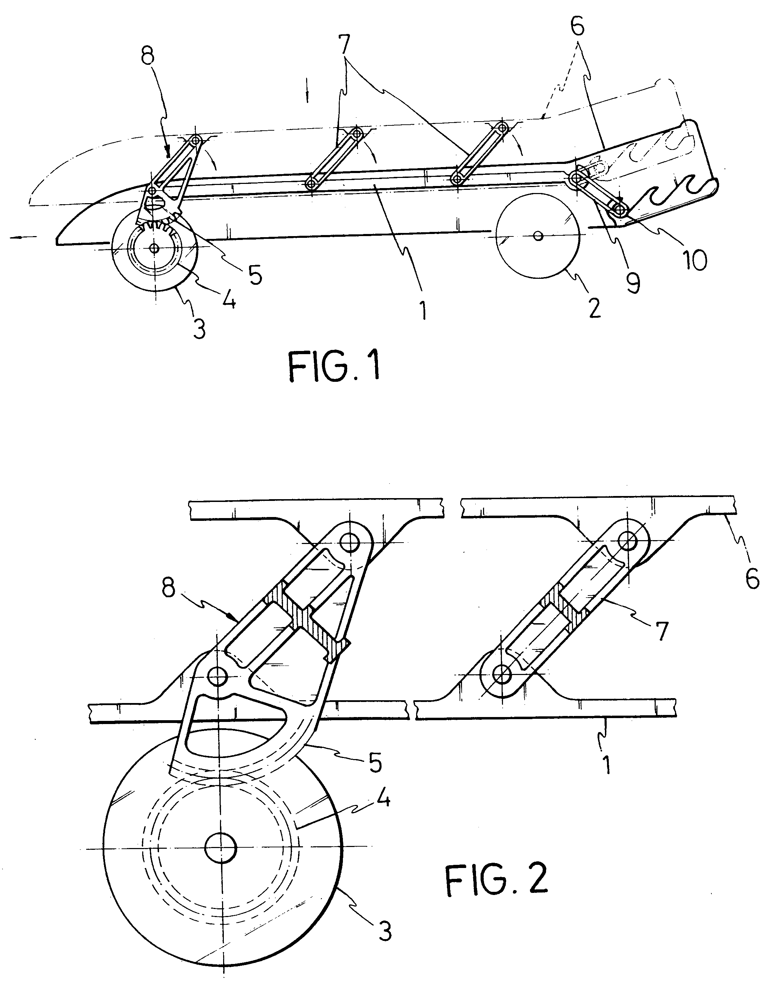

Referring to the numeration adopted in the figures, we can see that the device for moving forward due to the inertia of the user's weight on scooters and skates, anticipated by the invention, is composed, in the operation example shown in figures 1 and 2, by platform 1 equipped with back 2 and front 3 wheels. The front wheels 3 have certain movement to obtain a variation in the scooter direction.

The front wheels 3 preferably incorporate a unidirectional pinion 4 of the type used in bicycle wheels.

The unidirectional pinion 4 is operated by the portion of jack arm 5, or toothed sector, connected to the lower side of the upper plate 6, over which is directly supported the user.

Plate 6 is articulated to platform 1, by means of parallel arms 7 of the same length, with which plate 6 conserves its parallelism during the angular movement or dropping of the arms or stays 7, as the set acts as in an articulated parallelogram. Preferably, the mechanism includes two rear arms 7 and another front one 8 defining the jack arm. As is clearly seen in figures 1 and 2, the jack arm 8 behaves like any of the arms 7 and its structure is strengthened by including the toothed sector 5. Both the arms 7 and the jack arm 8 are articulated by means of gudgeons, to the mobile plate 6 and platform 1.

The displacement being produced parallel to the support plate 6, the toothed sector 5 of the jack arm 8 generates the rotation of the unidirectional pinion 4 determining the scooter impulse in the forward direction.

To recover the original position of the plate elevation 6 with respect to the platform 1, enabling a new operation to be started of the jack arm 8 over the unidirectional pinion 4, there is a recovery element, shown in this operating example, to which we are referring by the elastic element 9. During the operational stroke of the jack arm 8 to move the scooter forward due to the inertia of the user's weight, the elastic element 9 extends recovering its original position when the user's pressure on plate 6 is reduced, leaving the set prepared for a new cycle.

The tension of the elastic element 9 can be regulated adapting it to the user's weight more easily reaching the distancing position of the mobile plate 6 with respect to the lower platform 1. In this example of preferable operation, the regulation of the tension of the elastic element 8 is obtained by locating the fastening point 10 of the elastic element 9 to the mobile plate 6, in a more distant position from the other end of the latter, or of the fixed connection to platform 1, as can easily be deduced by observing figure 1.

Although the system of operation defined by the jack arm 8 and the pinion 4 has been described as preferable in figures 1 and 2, the forward movement of the skate or scooter can also be obtained with another transmission mechanism, of similar effect, as that defined by a side lever linked to the unidirectional pinion, on pushing downwards by an arched sector derived from the mobile plate.

In this case, there is no jack arm and in its place can be located a pair of articulated arms identical to the arms 7.

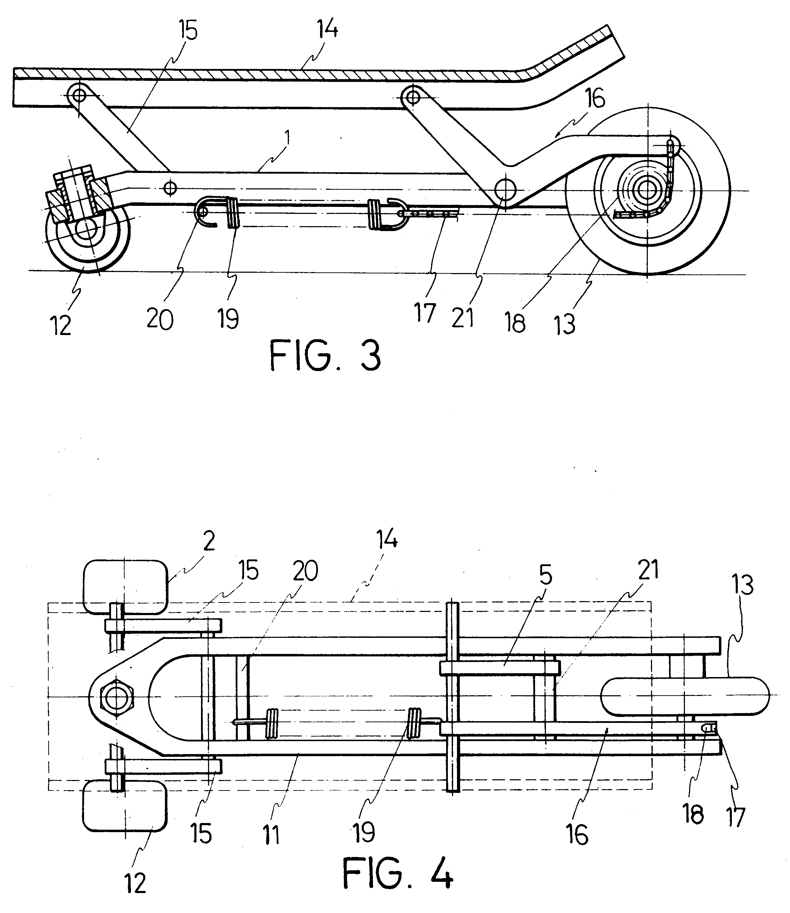

In another form of operation of the invention, specifically that shown in figures 3 and 4 where the impulsion system is by chain, the platform 11 is equipped with front guiding wheels 12 and a back motory wheel 13. In a level higher than platform 11 is plate 14, generally horizontal and related to platform 11 through four arms 15 articulated at their ends forming an articulated parallelogram, being one of said arms 15 extended in its lower end or articulated to platform 11, forming in this way the swinging lever with reference number 16 in this example of preferable operation, corresponding to figures 3 and 4.

The free end of the lever 16 is connected to a drag chain 17 of a unidirectional pinion linked to the live axle of the apparatus. The other end of the drag chain 17 is connected to the spring 19 defining the means of recovery of the original position. The spring 19 is fastened to the fixed point 20 of the platform 11. The swinging lever 16 thus rotates around the lower axle 21 which is fixed due to being fastened to platform 11.

With this device, due to the elastic tension produced by the helicoidal spring 19, the scooter acquires in a rest condition the position shown in figure 3, that is, with the mobile plate 14 in a position of maximum distance from platform 11 incorporating a limiting element which has not been shown in the figures so as not unnecessarily complicate them. When the user applies his weight over the scooter, since his foot is directly supported over the mobile plate 14, as initially shown, the parallel displacement of the latter takes place to approach platform 11 and hence the rotation of the arms 15 in an anti-clockwise direction. As lever 16 carries out the same angular travel to replace one of these arms or parallel rods 15, the drag of the chain 17 is started and therefore the rotation of the pinion 18 in the direction of moving forward, simultaneously to this movement occurs the lengthening of the helicoidal traction spring 19, that is, that the forward movement of the scooter occurs overcoming the resistance offered by said spring. 19.

When the user partially or totally removes pressure from the scooter, even the wheels leaving the ground, it will be easily be understood that the initial position of distancing between the mobile plate and the platform is recover, thanks to the operation of the recovery element, in this way preparing the scooter or skate for a new cycle of forward movement.

## Claims

**1.- DEVICE FOR MOVING FORWARD DUE TO THE INERTIA OF THE USER'S WEIGHT ON SCOOTERS AND SKATES,** the latter being of the type comprising a carrier support with front and back wheels, characterized because they are composed of a platform (1, 11) supporting a pair of guiding wheels (2, 12) and at least one motory wheel (3, 13) being related to an upper plate (6, 14) far from it and prone to displacement being articulated and guided by some arms (7, 15) or parallel rods, lowering due to the inertia of the user's weight to operate a lever (8, 16) in whose angular travel the operation of the standard system of transmission is generated, preferably by a toothed pinion with a chain, to a clutch mechanism acting directly over the motory wheel or wheels (3, 13) or their axle, making the apparatus move forward; the mentioned transmission mechanism may have an intermediate stage of movement reduction or multiplication and being equipped with the platform (1, 11) and the mobile plate (6, 14) recovering its original position or distancing with the aid of an elastic element (9, 19) or something similar.

**2.- DEVICE FOR MOVING FORWARD DUE TO THE INERTIA OF THE USER'S WEIGHT ON SCOOTERS AND SKATES,** according to claim 1, in which the unidirectional pinion 4 or pinions, of the bicycle type, engaged with a jack arm (8) operated by the mobile plate (6) whose lowering provokes the rotation of said unidirectional pinion (4).

**3.- DEVICE FOR MOVING FORWARD DUE TO THE INERTIA OF THE USER'S WEIGHT ON SCOOTERS AND SKATES,** according to previous claims, in which the mentioned means of guidance are defined by some strong parallel arms (7) articulated at their ends in flush points of the platform (1) and mobile plate (6) producing the rotation of the unidirectional pinion (4) being the teeth (5) of the jack arm (8) engaged with it.

**4.- DEVICE FOR MOVING FORWARD DUE TO THE INERTIA OF THE USER'S WEIGHT ON SCOOTERS AND SKATES,** according to previous claims, in which the platform (1) and mobile plate (6) includes related elastic elements (8), to enable the recovery of the original position on reducing or canceling the weight that gravitates over the mobile plate (6), the tension of these elastic elements (8) capable of being regulated adjusting to the user's weight.

**5.- DEVICE FOR MOVING FORWARD DUE TO THE INERTIA OF THE USER'S WEIGHT ON SCOOTERS AND SKATES,** according to previous claims, in which the arms (7) nearest to the unidirectional pinion (4) are extended at their lower end in a circular toothed sector (5) whose centre is precisely the lower point of articulation of the arm, this point also being that of rotation of the lever comprising the arm and circular centre, in such a way that on dropping said lever or jack arm (8) the attack of the teeth of the toothed sector is produced (5) on the teeth of the unidirectional pinion (4).

**6.- DEVICE FOR MOVING FORWARD DUE TO THE INERTIA OF THE USER'S WEIGHT ON SCOOTERS AND SKATES,** according to claim 1 in which at least one of the arms (15) or parallel rods defining an articulated parallelogram for the displacement of the upper plate (14), is extended at its lower point of swing and fastening to form a lever (16) whose free end has an operating chain (17) articulated, that after passing through the unidirectional pinion (8) is fastened to a fixed point (20) of the platform (11) through a helicoidal spring (19).

FIG.1

FIG.2

FIG. 3

FIG. 4

**European Patent Office**

# EUROPEAN SEARCH REPORT

Application Number

EP    91 50 0095

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | DE-A-3 730 839 (E.HEISS) | 1-5 | B62M1/06 |
| A | * the whole document * | 6 | |
| | --- | | |
| X | US-A-4 779 863 (K.M.YANG) | 1-5 | |
| | * column 3, line 43 - column 5, line 2; figures 1-6 * | | |
| | --- | | |
| X | US-A-1 509 898 (G.E.MCCONNELL) | 1,2,4,6 | |
| | * the whole document * | | |
| | ----- | | |
| | | | **TECHNICAL FIELDS SEARCHED (Int. Cl.5 )** |
| | | | B62M A63C |

The present search report has been drawn up for all claims

| Place of search | Date of completion of the search | Examiner |
|---|---|---|
| THE HAGUE | 21 NOVEMBER 1991 | FRANKS B.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document